# EUROPEAN PATENT APPLICATION

(11) **EP 3 578 611 A1**
(43) Date of publication of application: **11.12.2019**
(21) Application number: 19179060.9
(22) Date of filing: 07.06.2019
(51) Int. Cl.: C09D 4/00

(54) **THE FACE OF A ROAD OR INFORMATION SIGN AND THE USE OF A UV-CURABLE VARNISH FOR THE PRODUCTION OF THE FACE OF A ROAD OR INFORMATION SIGN**

(30) Priority: 07.06.2018 PL 42584418
(71) Applicant: Erplast Sp. z o.o., 85-778 Bydgoszcz (PL)
(72) Inventor: RYMER, Krzysztof, 85-778 Bydgoszcz (PL)
(74) Representative: Augustyniak, Magdalena Anna

(57) **Abstract**

The subject-matter of the invention is the face of a road or information sign comprising a self-adhesive retroreflective film layer (1) on which a UV-curable ink layer (2) is placed, and on the UV-curable ink layer (2) a protective layer of UV-curable varnish (3) is placed, wherein the varnish contains from 30 to 80% by weight of acrylate monomer, from 10 to 70% by weight of urethane acrylate monomer, from 2.5 to 10% by weight of polymerization photoinitiator and up to 6% by weight of photo stabilizer.

The subject-matter of the invention is also the use of varnish with the abovementioned composition for the production of the face of a road - or information sign.

## Description

The subject-matter of the invention is the face of a road or information sign and the use of a UV-curable varnish for the production of the face of a road or information sign.

The faces of road and information signs are a very specific product which must be characterized by appropriate colours, retroreflective capacity and adequate long-term durability.

The presently known methods of producing faces of road and information signs are based on materials which must meet very strict requirements compliant with European standards described in PN-EN 12899-1: 2010 regarding, among others, colours and their resistance to UV radiation and certain retroreflective properties.

In most cases, the faces of road and information signs are produced using the screen printing technology or transparent colour films are placed on them. In contrast to the traditional technology of production of the faces of road and information signs, an innovative production method based on a UV digital printing technology has been developed. The digital printing technology consists in applying ink microdroplets in the form of a liquid polymer onto the retroreflective material which, due to UV radiation, undergoes a curing process forming a thin polymeric layer with a rough surface. Unfortunately, this form of printing the face of a road and information sign is the reason for a very significant reduction of retroreflective properties. In order to prevent this negative phenomenon of the reduction of retroreflective properties as well as poor scratch resistance and low colour resistance to UV radiation, an additional transparent non-homogenous protective layer in the form of a transparent adhesive film is placed with parameters ensuring compliance with PN-EN 12899-1: 2010 being close to the lower required coefficients of retroreflection and maintaining maximum 12 years of resistance to weathering. However, the film application technology is burdened with numerous disadvantages such as poor cohesion to the substrate (trapped air bubbles are the cause of delamination), wrinkling of the film and the need to season it for min. 24 h. The film itself has low resistance to scratching, chemicals and temperature. In addition, the two-phase structure of the film laminate consisting of a transparent film and a layer of transparent adhesive is an additional obstacle to obtaining very good retroreflective properties of the face of road or information signs which, unfortunately, fall in the lower range of requirements specified by the aforementioned standard.

In connection with the above, the object of the invention was to develop a face of a road or information sign which would be resistant to weathering and mechanical damage and which would be characterized by improved retroreflective properties for at least a ten-year period of use.

The subject-matter of the invention is the face of a road or information sign comprising a self-adhesive retroreflective film layer on which an information layer of a UV-curable ink is placed by means of the digital printing method. Subsequently, a protective layer of UV-curable varnish is placed on to the UV-curable ink layer , wherein the varnish contains from 30 to 80% by weight of acrylate monomer, from 10 to 70% by weight of urethane acrylate monomer, from 2.5 to 10% by weight of polymerization photoinitiator, and up to 6% by weight of photostabilizer.

Preferably, the self-adhesive retroreflective film layer has a thickness of 0.1 to 0.5 mm, and the UV-curable ink layer has a thickness of 10 to 50 µm.

Preferably, the protective layer of UV-curable varnish has a thickness of 5 to 50 µm.

Preferably, the varnish additionally contains 1-2% by weight of powdered nanoparticles of SiO2 or Teflon with a diameter of 1-10 nm.

Preferably, the acrylate monomer is 1,6-hexanediol diacrylate.

Preferably, the urethane acrylate monomer is a monofunctional or multifunctional urethane acrylate.

Preferably, the urethane acrylate monomer is selected from the group comprising 2-((butylamino)carbonyloxy)ethyl acrylate, 1,6-bis(acryloxycarbonylamino)hexane or 1,6-bis(acryloxy-3-ethoxycarbonylamino)-2,4,4-trimethylhexane.

Preferably, the polymerization photoinitiator is methyl benzoylformate.

Preferably, the photostabilizer is a mixture of bis-(1,2,2,6,6-pentamethyl-4-piperidyl) sebacate and methyl-(1,2,2,6,6-pentamethyl-4-piperidyl) sebacate.

Preferably, the varnish contains 46% by weight of 1,6-hexanediol diacrylate, 46% by weight of 1,6-bis(acryloxycarbonylamino)hexane, 4% by weight of methyl benzoylformate, 2% by weight bis-(1,2,2,6,6-pentamethyl-4-piperidyl) sebacate and 2% by weight methyl-(1,2,2,6,6-pentamethyl-4-piperidyl) sebacate.

The subject-matter of the invention is also the use of a UV-curable varnish containing from 30 to 80% by weight of acrylate monomer, from 10 to 70% by weight of urethane acrylate monomer, from 2.5 to 10% by weight of polymerization photoinitiator and up to 6% by weight of photostabilizer, for the production of the face of a road or information sign containing a self-adhesive retroreflective film layer on which a layer of UV-curable ink layer is placed, and on which a protective layer of a UV-curable varnish is placed.

Preferably, the protective layer of UV-curable varnish has a thickness of 5 to 50 µm.

Preferably, the varnish additionally contains 1-2% by weight of powdered nanoparticles of SiO2 or Teflon with a diameter of 1-10 nm.

Preferably, the acrylate monomer is 1,6-hexanediol diacrylate.

Preferably, the urethane acrylate monomer is a monofunctional or multifunctional urethane acrylate

Preferably, the urethane acrylate monomer is selected from the group comprising 2-((butylamino)carbonyloxy)ethyl acrylate, 1,6-bis(acryloxycarbonylamino)hexane or 1,6-bis(acryloxy-3-ethoxycarbonylamino)-2,4,4-trimethylhexane.

Preferably, the polymerization photoinitiator is methyl benzoylformate.

Preferably, the photostabilizer is a mixture of bis-(1,2,2,6,6-pentamethyl-4-piperidyl) sebacate and methyl-(1,2,2,6,6-pentamethyl-4-piperidyl) sebacate.

Preferably, the varnish contains 46% by weight of 1,6-hexanediol diacrylate, 46% by weight of 1,6-bis(acryloxycarbonylamino)hexane, 4% by weight of methyl benzoylformate, 2% by weight bis-(1,2,2,6,6-pentamethyl-4-piperidyl) sebacate and 2% by weight methyl-(1,2,2,6,6-pentamethyl-4-piperidyl) sebacate.

The term "the face of a road or information sign" refers to the face of any road, information and advertising sign or board.

The 1,6-hexanediol diacrylate, being one of the monomers contained in the varnish used in the invention, due to the presence of two ethylene groups in the molecule, forms - as a result of polymerization - cross-linked structures with high resistance to chemical agents and increased hardness.

The second monomer, having a very significant effect on the properties of the obtained product, is a monomer from the group of urethane acrylates. There are many different commercially available urethane acrylates which may be utilized to prepare the varnish used in the invention. Urethane acrylates containing one and more ethylene groups in their molecule can be used. The commercially available products differ significantly in properties such as density, viscosity or surface tension, thanks to which it is possible to choose a suitable product for a particular use. Urethane acrylates are, on the one hand, characterized by high abrasion resistance, and on the other, they significantly increase the elasticity of the product obtained with their use. The properties of the product can be modified within wide limits by either using urethane acrylates containing more than one ethylene group in the molecule (which, as a result of polymerization, produces a cross-linked structure with greater stiffness and hardness), or extending the aliphatic chains present in their molecules, which gives the opposite effect.

Important components of the varnish, ensuring long-term maintenance of very good physicochemical and optical properties by the coating formed in polymerization, are, despite exposure to unfavourable use conditions, the photo stabilizers: bis-(1,2,2,6,6-pentamethyl-4-piperidyl) sebacate in a mixture of methyl-(1,2,2,6,6-pentamethyl-4-piperidyl) sebacate. The addition of the photo stabilizers eliminates or significantly reduces the loss of gloss and cracking of the product over long-term use.

Whereas the addition of powdered nanoparticles of SiO2 or Teflon increases the hydrophobicity of the protective layer of the varnish.

In accordance with the invention, the layer of UV-curable varnish, applied on a cured layer of colour ink with a rough surface, perfectly fills any remaining roughness formed after printing with colour ink, thanks to which a homogeneous UV-cured protective layer of varnish coherent with the substrate is obtained.

Due to the use of varnish with a composition similar to that of the ink, i.e. containing acrylate and urethane acrylate monomers and other compounds, a reaction between the ink and the varnish is possible. The monomers contained in the varnish bind permanently with the polymerized ink through physicochemical bonds. The mutual penetration of these layers results in a cross-linked structure that ensures very good adhesion, as a result of which a layer of varnish with excellent properties is formed on the surface of the ink. It is, among others, characterized by abrasion resistance, high hardness and impact strength, clarity, gloss, scratch resistance and very high resistance to chemicals, temperature and UV radiation over long-term use of minimum 10 years as well as hydrophobic properties.

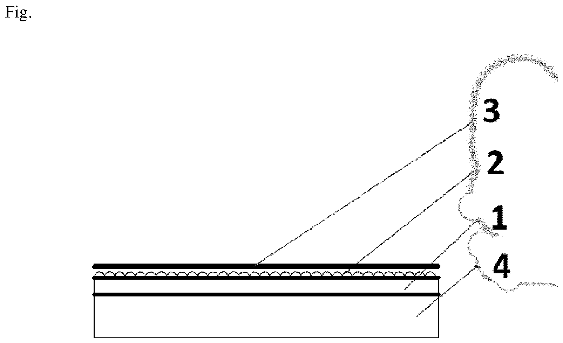

The face in accordance with the invention is illustrated schematically in the figure which presents the relative position of its individual layers.

The invention is illustrated by the examples provided below.

The face of a road or information sign, in accordance with the invention, illustrated schematically in the figure, contains a layer 1 of a self-adhesive retroreflective film layer of 0.230 mm in thickness, on which a layer 2 of UV-curable ink with a thickness of 38 µm is placed. On the layer 2 of UV-curable ink a protective layer 3 of UV-curable varnish with a thickness of 20 µm is placed.

In other embodiments, the face of a road or information sign contains a layer 1 of a self-adhesive retroreflective film with a thickness of 0.130 mm and 0.490 mm on which a layer 2 of UV-curable ink with a thickness of 12 µm and 48 µm, respectively, is placed, and, wherein on the layer 2 of the UV-curable ink a protective layer 3 of UV-curable varnish with a thickness of 5 µm and 50 µm, respectively, is placed.

The face in accordance with the invention can be placed on the plate 4 of a road or information sign made most frequently of galvanized steel sheet, aluminium sheet or composite materials.

The UV-curable varnish layer contains 46% by weight of 1,6-hexanediol diacrylate as acrylate monomer, 46% by weight of 1,6-bis (acryloxycarbonylamino) hexane as two-functional urethane acrylate monomer, 4% by weight of methyl benzoylformate as type II photoinitiator and a mixture of 2% by weight of bis-(1,2,2,6,6-pentamethyl-4-piperidyl) sebacate and 2% by weight of methyl-(1,2,2,6,6-pentamethyl-4-piperidyl) sebacate as photo stabilizer, wherein the total concentration of all components of the mixture is 100% by weight.

In other embodiments, the UV-curable varnish layer contains:
- 70% by weight of 1,6-hexanediol diacrylate as acrylate monomer, 20% by weight of 2-((butylamino) carbonyloxy) ethyl acrylate as a monofunctional urethane acrylate monomer (trade name Genomer 1122), 5% by weight of methyl benzoylformate as type II photoinitiator, and a mixture of 2.5% by weight of bis-(1,2,2,6,6-pentamethyl-4-piperidyl) sebacate and 2.5% by weight of methyl-(1,2,2,6,6-pentamethyl-4-piperidyl) sebacate as photostabilizer;
- 59% by weight of 1,6-hexanediol diacrylate as acrylate monomer, 30% by weight of 2-((butylamino)carbonyloxy)ethyl acrylate as a monofunctional urethane acrylate monomer (trade name Genomer 1122), 7% by weight of methyl benzoylformate as type II photoinitiator and a mixture of 1.5% by weight of bis-(1,2,2,6,6-pentamethyl-4-piperidyl) sebacate and 1.5% by weight of methyl-(1,2,2,6,6-pentamethyl-4-piperidyl) sebacate as photostabilizer and 1% by weight of powdered SiO2 nanoparticles with a diameter of 2 nm;
- 50% by weight of 1,6-hexanediol diacrylate as acrylate monomer, 41% by weight of 1,6-bis(acryloxycarbonylamino)hexane as two-functional urethane acrylate monomer, 3% by weight of methyl benzoylformate as type II photoinitiator and a mixture of 2% by weight of bis-(1,2,2,6,6-pentamethyl-4-piperidyl) sebacate and 2% by weight of methyl-(1,2,2,6,6-pentamethyl-4-piperidyl) sebacate as photostabilizer and 2% by weight of powdered Teflon nanoparticles with a diameter of 8 nm;

- 80% by weight of 1,6-hexanediol diacrylate as acrylate monomer, 10% by weight of 2-((butylamino)carbonyloxy)ethyl acrylate as a monofunctional urethane acrylate monomer (trade name Genomer 1122), 4% by weight of methyl benzoylformate as type II photoinitiator and a mixture of 3 % by weight of bis-(1,2,2,6,6-pentamethyl-4-piperidyl) sebacate and 3% by weight of methyl-(1,2,2,6,6-pentamethyl-4-piperidyl) sebacate as photostabilizer;
- 30% by weight of 1,6-hexanediol diacrylate as acrylate monomer, 55% by weight of 2-((butylamino)carbonyloxy)ethyl acrylate as monofunctional urethane acrylate monomer (trade name Genomer 1122), 10% by weight of methyl benzoylformate as type II photoinitiator and a mixture of 2.5% by weight of bis-(1,2,2,6,6-pentamethyl-4-piperidyl) sebacate and 2.5% by weight of methyl-(1,2,2,6,6-pentamethyl-4-piperidyl) sebacate as photostabilizer;
- 25.5% by weight of 1,6-hexanediol diacrylate as acrylate monomer, 70% by weight of 1,6-bis(acryloxy-3-ethoxycarbonylamino)-2,4,4-trimethylhexane as two-functional urethane acrylate monomer, 2.5% by weight of methyl benzoylformate as type II photoinitiator and a mixture of 1% by weight of bis-(1,2,2,6,6-pentamethyl-4-piperidyl) sebacate and 1% by weight of methyl-(1,2,2,6,6-pentamethyl-4-piperidyl) sebacate as photostabilizer.

The face of the road or information sign is made using a technology based on UV digital printing, on, for example, an UV AGFA Anapurna M2050 printer using UV-curable inkjet inks, e.g. Oralite 5019 UV. These inks are applied by digital printing method onto retroreflective materials in the form of retroreflective films, e.g. ORALITE 5710 Engineer Grade Premium, ORALITE 5810 High Intensity Grade, ORALITE 5910 HIGH Intensity Prismatic Grade, and ORALITE 6910 Brilliant Grade bearing the CE mark. The ink can be also applied to other materials such as self-adhesive non-retroreflective films, PVC boards, etc. The system of printing the road sign content information on the surface of, for example, a retroreflective film ORALITE 5910 is carried out with six 12pl print heads for printing the information layer with inks in primary colours 10-50 µm in thickness, and two additional 42pl print heads for printing the protective layer with a transparent varnish with a thickness of 5-50 µm, which are immediately cured by means of UV radiation from, e.g. lamps such as UV INKJET LAMP V0 171D with different power levels set on a 10-grade scale from 80 to 200 w/cm².

The protective layer of UV-curable varnish can be placed onto a retroreflective film with an information layer printed on it with colour inks in a separate varnishing operation by means of any known application method. For example, a monomer composition with a selected layer thickness and one of the compositions mentioned above is placed on to the ink layer and is irradiated with a radiator, e.g. of the Hg-Strahler type, in the UV range of the following parameters::
UV A - 1000 mJ/cm² and 790 mW/cm²
UV B - 1000 mJ/cm² and 780 mW/cm²
UV C - 290 mJ/cm² and 230 mW/cm²
UV V - 890 mJ/cm² and 670 mW/cm²

After a few seconds, solidification of the liquid composition into a solid, homogeneous, glossy and colourless polymer layer is observed.

After placing the varnish layer onto the ink layer, tests are carried out in accordance with the PN-EN 12899-1: 2010 "Fixed, vertical road signs - Part 1: Fixed signs" in an aging chamber after exposure to UV radiation for 0 h, 500 h, 1000 h, 1500 h, and 2000 h. Tests of the properties of the faces of road and information signs are carried out for the coefficient of retroreflection, coefficient of luminance and chromaticity coordinates. The obtained results confirm the high properties of the varnish. In addition, "impact resistance" tests are carried out, namely, a ball with a mass of 450 g with a radius of 50 mm at the point of impact is dropped onto the surface of the face from a height of 220 mm. The tested faces of the invention showed no damage on the surface at a distance of up to 6 mm from the point of impact.

After curing of the varnish protective layer, the face (retroreflective film with an information layer of ink and a protective layer of varnish) is applied using, for example, a ROLLSROLLER-FLATBED APLLICATOR 600T roller applicator onto the plate of the road or information sign made most frequently of galvanized steel sheet, aluminium sheet or composite materials, as a result of which a ready-made road or information sign is obtained.

## Claims

1. A face of a road or information sign, comprising a self-adhesive retroreflective film layer (1), on which a UV-curable ink layer (2) is placed, **characterized in that** a protective layer of UV-curable varnish (3) is placed on the UV-curable ink layer (2), wherein the varnish contains from 30 to 80% by weight of acrylate monomer, from 10 to 70% by weight of the urethane acrylate monomer, from 2.5 to 10% by weight of polymerization photoinitiator and up to 6% by weight of photo stabilizer.

2. The face according to claim 1 **characterized in that** the self-adhesive retroreflective film layer (1) has a thickness from 0.1 to 0.5 mm, and the UV-curable ink layer (2) has a thickness from 10 to 50 µm.

3. The face according to claims 1 or 2 **characterized in that** the protective layer of UV-curable varnish (3) has a thickness from 5 to 50 µm.

4. The face according to anyone of claims 1-3 **characterized in that** the varnish additionally contains 1-2% by weight of powdered nanoparticles of SiO₂ or Teflon with a diameter of 1-10 nm.

5. The face according to anyone of claims 1-4 **characterized in that** the acrylate monomer is 1,6-hexanediol diacrylate.

6. The face according to anyone of claims 1-5 **characterized in that** the urethane acrylate monomer is a monofunctional or multifunctional urethane acrylate.

7. The face according to claim 6 **characterized in that** the urethane acrylate monomer is selected from the group comprising 2-((butylamino)carbonyloxy)ethyl acrylate, 1,6-bis(acryloxycarbonylamino)hexane or 1,6-bis(acryloxy-3-ethoxycarbonylamino)-2,4,4-trimethylhexane.

8. The face according to anyone of claims 1-7 **characterized in that** the polymerization photoinitiator is methyl benzoylformate.

9. The face according to anyone of claims 1-8 **characterized in that** the photostabilizer is a mixture of bis-(1,2,2,6,6-pentamethyl-4-piperidyl) sebacate and methyl-(1,2,2,6,6-pentamethyl-4-piperidyl) sebacate.

10. The face according to anyone of claims 1-9 **characterized in that** the varnish contains 46% by weight of 1,6-hexanediol diacrylate, 46% by weight of 1,6-bis(acryloxycarbonylamino)hexane, 4% by weight of methyl benzoylformate, 2% by weight of bis-(1,2,2,6,6-pentamethyl-4-piperidyl) sebacate and 2% by weight of methyl-(1,2,2,6,6-pentamethyl-4-piperidyl) sebacate.

11. A use of a UV-curable varnish containing from 30 to 80% by weight of acrylate monomer, from 10 to 70% by weight of urethane acrylate monomer, from 2.5 to 10% by weight of polymerization photoinitiator and up to 6% by weight of photo stabilizer, for the production of the face of a road or information sign comprising a self-adhesive retroreflective film layer (1), on which a UV-curable ink layer (2) is placed, and on which a protective layer of a UV-curable varnish (3) is placed.

12. The use according to claim 11 **characterized in that** the protective layer of the UV-curable varnish (3) has a thickness from 5 to 50 µm.

13. The use according to claims 11 or 12 **characterized in that** the varnish additionally contains 1-2% by weight of powdered nanoparticles of SiO2 or Teflon with a diameter of 1-10 nm.

14. The use according to anyone of claims 11-13 **characterized in that** the acrylate monomer is 1,6-hexanediol diacrylate.

15. The use according to anyone of claims 11-14 **characterized in that** the urethane acrylate monomer is a monofunctional or multifunctional urethane acrylate.

16. The use according to claim 15 **characterized in that** the urethane acrylate monomer is selected from the group comprising 2-((butylamino)carbonyloxy)ethyl acrylate, 1,6-bis(acryloxycarbonylamino)hexane or 1,6-bis(acryloxy-3-ethoxycarbonylamino)-2,4,4-trimethylhexane.

17. The use according to anyone of claims 11-16 characterized on that the polymerization photoinitiator is methyl benzoylformate.

18. The use according to anyone of claims 11-17 **characterized in that** the photostabilizer is a mixture of bis-(1,2,2,6,6-pentamethyl-4-piperidyl) sebacate and methyl-(1,2,2,6,6-pentamethyl-4-piperidyl) sebacate.

19. The use according to anyone of claims 11-18 **characterized in that** the varnish contains 46% by weight of 1,6-hexanediol diacrylate, 46% by weight of 1,6-bis(acryloxycarbonylamino)hexane, 4% by weight of methyl benzoylformate, 2% by weight of bis-(1,2,2,6,6-pentamethyl-4-piperidyl) sebacate and 2% by weight of methyl-(1,2,2,6,6-pentamethyl-4-piperidyl) sebacate.
